# EUROPÄISCHE PATENTSCHRIFT

(11) **EP 2 604 412 B1**
(45) Veröffentlichungstag und Bekanntmachung des Hinweises auf die Patenterteilung: **24.01.2018**
(21) Anmeldenummer: 12197237.6
(22) Anmeldetag: 14.12.2012
(51) Int. Cl.: B29C 49/78, B29C 49/48, B29C 49/36

(54) **Vorrichtung und Verfahren zum Umformen von Kunststoffvorformlingen zu Kunststoffbehältnissen mit Identifikation von Austauschteilen**
Device and method for reforming plastic preforms into plastic containers with identification of exchange parts
Dispositif et procédé de déformation d'ébauches en plastique en conteneurs en plastique avec identification de pièces échangeables

(30) Priorität: 14.12.2011 DE 102011056443
(43) Veröffentlichungstag der Anmeldung: 19.06.2013
(73) Patentinhaber: Krones AG, 93073 Neutraubling (DE)
(72) Erfinder: Voth, Klaus, 93073 Neutraubling (DE)
(74) Vertreter: Bittner, Bernhard

(56) Entgegenhaltungen:
- EP-A1- 1 746 030
- EP-A2- 2 236 268
- WO-A2-2004/051857
- DE-A1- 19 941 485
- DE-A1-102007 025 521
- DE-A1-102009 058 086

## Beschreibung

Die Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei ist üblicherweise an einer Transporteinrichtung, wie einem Blasrad, eine Vielzahl von Blasstationen vorgesehen, welche zur Umformung der Kunststoffvorformlinge zu den Kunststoffbehältnissen dienen. Diese Blasstationen weisen dabei üblicherweise eine Reihe von Austauschteilen auf, wie beispielsweise Reckstangen, Blasdüsen, Blasformen und dergleichen. Die vorliegende Erfindung wird unter Bezugnahme auf Blasformen beschrieben. In der Praxis hat sich gezeigt, dass teilweise anstelle der tatsächlich zu der Maschine gehörigen Austauschteile andere Austauschteile verwendet werden, welche aufgrund beispielsweise mangelnder Qualität Fehler an den herzustellenden Behältnissen oder gar an der Maschine selbst verursachen. Üblicherweise werden auch die jeweiligen Maschinen an den aktuell zur Bearbeitung anstehenden Behälter angepasst. Zu diesem Zweck wird eine Vielzahl der oben erwähnten Teile ausgetauscht.

Aus der DE 10 2007 025 521 A1 ist eine Behandlungsmaschine für Flaschen, Dosen oder dergleichen Behälter bekannt. In diesem Dokument wird vorgeschlagen, dass ein Identifizierungselement vorgesehen ist, welches jeweils den Austauschteilen zugeordnet ist. Bei diesem Identifizierungselement kann es sich beispielsweise um einen Strichcode oder einen Transponder handeln, der an dem Austauschteil angeordnet ist, damit dieses identifiziert werden kann. Durch diese Vorgehensweise ist eine Identifizierung der einzelnen Austauschteile möglich. Diese jedoch auch unmittelbar wahrnehmbaren Identifizierungselemente sind jedoch oftmals nicht fälschungssicher. Auf diese Weise ist es möglich, dass durch Nachahmung eines derartigen Identifizierungselementes und die Aufbringung an einem Austauschteil der Maschine suggeriert werden kann, dass tatsächlich das korrekte Austauschteil eingebaut ist. Daneben ist die Anbringung derartiger Identifizierungselemente an den Austauschteilen oftmals aufwendig und auch die Identifizierungselemente, wie beispielsweise Strichcodes oder Transponder, können im laufenden Betrieb selbst leicht beschädigt werden. EP-A-2236248 offenbart eine Vorrichtung und ein Verfahren gemäß dem Oberbegriff der Ansprüche 1 und 6. Der vorliegenden Erfindung liegt daher die Aufgabe zugrunde, bei derartigen Vorrichtungen zum Umformen von Kunststoffvorformlingen zu Kunststoffbehältnissen die Identifizierung von Austauschteilen zu vereinfachen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, an der eine Vielzahl von Behandlungsstationen angeordnet ist, wobei diese Behandlungsstationen jeweils auswechselbare Blasformen aufweisen, welche jeweils einen Hohlraum ausbilden, innerhalb dessen die Kunststoffvorformlinge zu den Kunststoffbehältnissen umgeformt werden und wobei die Blasformen jeweils Beaufschlagungseinrichtungen aufweisen, welche die Kunststoffvorformlinge zu deren Expansion mit einem fließfähigen Medium, insbesondere einem gasförmigen Medium, wie beispielsweise Luft, beaufschlagen. Dabei weist wenigstens ein austauschbares Element der Blasstationen jeweils an einem vorgegebenen geometrischen Bereich seiner Oberfläche einen Erkennungsbereich auf, welcher für das jeweilige austauschbare Element eindeutig charakteristisch ist. Weiterhin weist die Vorrichtung eine Erfassungseinrichtung zum berührungslosen Erfassen dieses Erkennungsbereiches auf. Die Erfassungseinrichtung ist auf den Erkennungsbereich ausgerichtet und der Erkennungsbereich ist durch die Oberfläche und insbesondere eine Struktur der Oberfläche des austauschbaren Elementes ausgebildet.

Im Gegensatz zum Stand der Technik ist also gerade keine zusätzliche Markierung an dem Austauschteil vorgesehen sondern es wird ein Bereich der Oberfläche selbst abgetastet. Im Rahmen der Herstellung jedes Austauschteils erhält jedes Austauschteil in dem genannten Erkennungsbereich eine zufällige bzw. statistische einzigartige Ausprägung, welche erfasst werden kann. Diese Ausprägung wird im Folgenden auch als Fingerabdruck bezeichnet, da sie das jeweilige Austauschteil eindeutig charakterisiert. Vorteilhaft handelt es sich bei der Oberfläche um eine Außenfläche des Austauschteils, auf jeden Fall um eine durch die Erfassungseinrichtung wahrnehmbare Fläche. Besonders bevorzugt wird der Erkennungsbereich wenigstens abschnittsweise und besonders bevorzugt vollständig durch eine metallische Oberfläche ausgebildet. Derartige metallische Oberflächen sind besonders gut zur Erfassung und/oder Auswertung geeignet.

Die vorliegende Erfindung wird unter Bezugnahme auf eine Vorrichtung zum Umformen von Kunststoffvorformlingen zu Kunststoffbehältnissen beschrieben.

Die Anmelderin behält sich daher vor, allgemein Schutz für eine Vorrichtung zum Behandeln von Behältnissen zu beanspruchen, welche wenigstens ein austauschbares Behandlungselement aufweist, welches zur Behandlung der Behältnisse dient und wobei das besagte austauschbare Element an einem vorgegebenen geometrischen Bereich seiner Oberfläche einen Erkennungsbereich der oben beschriebenen Art aufweist, der für das austauschbare Element eindeutig charakteristisch ist, sowie auch die oben beschriebene Erfassungseinrichtung zum berührungslosen Erfassen dieses Erkennungsbereiches. Auch das weiter unten noch beschriebene Verfahren ist entsprechend auch auf andere Vorrichtungen zum Behandeln von Behältnissen anwendbar.

Bei einer weiteren vorteilhaften Ausführungsform weist die Vorrichtung eine Speichereinrichtung auf, in der besonders bevorzugt eine Vielzahl von Referenzdaten bzw. Referenzbildern von Erkennungsbereichen abgelegt ist, sowie eine Vergleichseinrichtung, welche ein von der Erfassungseinrichtung erfasstes Bild mit wenigstens einem in der Speichereinrichtung abgelegten Referenzbild vergleicht. Auf Basis dieses Vergleichs kann geschlossen werden, ob ein der Maschine bekanntes Austauschteil eingesetzt wurde bzw. ein bestimmtes spezifiziertes Austauschteil. Ebenso kann auf diese Weise festgestellt werden, wenn ein Austauschteil eingesetzt wurde, welches nicht mit den vorbestimmten Spezifikationen übereinstimmt. Auf Basis des besagten Vergleichs kann anschließend an den Benutzer eine Meldung ausgegeben werden, beispielsweise ein Hinweis darauf, dass ein fehlerhaftes oder nicht korrektes Bauteil bzw. Austauschteil eingesetzt wurde. Auch die Position des fehlerhaften oder nicht korrekten Bauteils bzw. Austauschteils kann so an den Benutzer übermittelt werden.

Bei einer weiteren vorteilhaften Ausführungsform weist die Vorrichtung auch eine Korrektureinrichtung auf, welche im Rahmen eines Vergleichs des erfassten Bildes mit dem Referenzbild eine Berücksichtigung vorbestimmter Änderungen an dem erfassten Erkennungsbereich erfasst bzw. berücksichtigt. So ist es beispielsweise möglich, dass sich der Erkennungsbereich durch Verschmutzungen oder dergleichen hinsichtlich seiner erfassbaren Struktur verändert und aus diesem Grund die Vergleichseinrichtung das erfasste Bild keinem gespeicherten Bild zuordnen kann. In diesem Fall sorgt der Korrekturmechanismus, der beispielsweise in Form eines geeigneten Algorithmus ausgebildet sein kann, dafür, dass trotz bestimmter Abweichungen noch eine Zuordnung des erfassten Bildes zu den jeweiligen Referenzbildern möglich ist.

So können beispielsweise derartige Veränderungen erkannt werden, die beispielsweise durch Kratzer in dem Erkennungsbereich oder durch Verschmutzungen hervorgerufen werden. Auch können solche Veränderungen festgestellt werden, die durch einen anderen Lichteinfall oder allgemein veränderte Umgebungen, wie z.B. durch den Einfluss von Wärme, hervorgerufen werden. Zu diesem Zweck wäre es möglich, dass sich die Erfassungseinrichtung bzw. eine Prozessoreinrichtung an bestimmten Strukturen des Erkennungsbereichs orientiert und bei Übereinstimmung einer bestimmten Anzahl an Strukturen zu dem Ergebnis gelangt, dass eine Übereinstimmung zwischen dem erfassten Bild und dem Referenzbild vorliegt. Der Erkennungsbereich weist eine eindeutige Oberflächenstruktur und insbesondere eine eindeutige Mikrostruktur auf. Wie oben erwähnt, unterscheiden sich bereits in Folge der Herstellung die jeweiligen Austauschteile, wie beispielsweise Blasformen, durch ihre Mikrostruktur. Auch wäre es möglich, die Austauschteile im Nachhinein, d.h. nach ihrer Herstellung, mit einem bestimmten Erkennungsmuster (wiederum in der Art eines Fingerabdruckes) zu versehen. Erfindungsgemäß ist die oben erwähnte Oberflächenstruktur bzw. Mikrostruktur mit dem Auge nicht erfassbar bzw. sind Unterschiede zwischen einzelnen Austauschteilen hinsichtlich dieser Mikrostruktur nicht mit dem Auge erfassbar.

Vorteilhaft wird auf Basis des von der Erfassungseinrichtung aufgenommenen Bildes ein Typ des Austauschteils erfasst und bevorzugt können damit auch beispielsweise auf Basis einer Datenbank alle Daten des Austauschteiles erfasst werden, wobei es weiterhin auch möglich ist, dass, wie erwähnt, die Daten in der Datenbank hinterlegt sind. Falls beispielsweise ein Kunde das Austauschteil auswechselt, kann die Vorrichtung bzw. Maschine erkennen, welche Form eingebaut ist und auch, mit welchem Rezept die Kunststoffvorformlinge mittels dieses Austauschteiles zu fertigen sind. Durch die hier erwähnte Erfassung können damit die Austauschteile eindeutig charakterisiert werden. Vorteilhaft ist eine Steuereinrichtung für die Vorrichtung vorgesehen, welche in Reaktion auf ein Erfassungsergebnis der Erfassungseinrichtung den Behandlungsprozess für die Behandlung der Kunststoffvorformlinge steuert.

Bei einer weiteren vorteilhaften Ausführungsform weist damit der Erkennungsbereich eine durch einen Herstellungsprozess des austauschbaren Elementes entstandene wahrnehmbare Struktur auf. Diese Struktur ist dabei vorteilhaft zufällig bzw. statistisch entstanden und besonders bevorzugt nur von der Erfassungseinrichtung wahrnehmbar.

Bei einer weiteren vorteilhaften Ausführungsform handelt es sich bei der Erfassungseinrichtung um eine optische Erfassungseinrichtung, wie insbesondere einen elektronischen Scanner. Dieser elektronische Scanner bzw. allgemein die Erfassungseinrichtung ist dabei vorteilhaft stationär angeordnet und die Austauschteile bewegen sich bezüglich dieser Erfassungseinrichtung. Es wäre jedoch auch möglich, dass sich die Erfassungseinrichtung gänzlich oder abschnittsweise mit den Behandlungsstationen mitbewegt. Weiterhin ist die Erfassungseinrichtung vorteilhaft derart ausgestaltet, dass sie ein Bild des Erkennungsbereiches während einer Bewegung dieses Erkennungsbereiches bzw. während einer Bewegung der Behandlungsstation aufnimmt. Weiterhin wäre es auch möglich, dass die Erfassungseinrichtung mehrere Bilder des besagten Erkennungsbereiches hintereinander aufnimmt. Auf diese Weise könnten Fehler, welche durch die Bildaufnahme entstehen, kompensiert werden.

Bei einer weiteren vorteilhaften Ausführungsform weist die Erfassungseinrichtung eine Bildaufnahmeeinrichtung auf, die zur ortsaufgelösten Aufnahme von Bildern zumindest des Erkennungsbereiches geeignet ist. Bei dieser Bildaufnahmeeinrichtung kann es sich beispielsweise um einen CCD-Chip oder dergleichen handeln.

Es wäre auch möglich, dass mehrere Erfassungseinrichtungen vorgesehen sind, welche mehrere Erfassungsbereiche eines oder auch mehrerer austauschbarer Elemente erfassen.

Bei einer weiteren vorteilhaften Ausführungsform ist das austauschbare Teil aus einer Gruppe von austauschbaren Teilen ausgewählt, welche Glasformen, Reckstangen, Halteklammern, Greifklammern, Bodenteile, Blasdüsen und dergleichen enthält.

Vorteilhaft handelt es sich bei dem oder den austauschbaren Teilen um bewegliche Elemente d.h. insbesondere um solche Elemente, die wenigstens abschnittsweise mit den Behältnissen mitbewegt werden.

Die vorliegende Erfindung ist weiterhin auf ein Verfahren zum Betreiben einer Vorrichtung zum Umformen von Kunststoffvorformlingen zu Kunststoffbehältnissen gerichtet, wobei die Vorrichtung eine Vielzahl von Behandlungsstationen aufweist, innerhalb derer die Kunststoffvorformlinge durch Beaufschlagung mit einem fließfähigen Medium zu den Kunststoffbehältnissen umgeformt werden und wobei mittels einer Erfassungseinrichtung jeweils wenigstens ein vorgegebener Erkennungsbereich wenigstens eines austauschbaren Elements der Behandlungsstation erfasst wird, wobei dieser Erkennungsbereich für das jeweilige austauschbare Element eindeutig charakteristisch ist. Der Erkennungsbereich wird durch eine von der Erfassungseinrichtung erfassbare Oberfläche des austauschbaren Elements ausgebildet.

Es wird daher auch verfahrensseitig vorgeschlagen, dass zur Identifizierung des Austauschteils nicht auf eine spezielle Markierung, wie einen RFID-Chip oder dergleichen, zurückgegriffen wird, sondern die Oberfläche des Austauschteils selbst beobachtet wird, um so die Identifikation zu ermöglichen.

Vorteilhaft wird das austauschbare Element durch die Erfassung des Erkennungsbereiches eindeutig charakterisiert bzw. ist eindeutig durch die Erfassung des Erkennungsbereiches charakterisierbar.

Auf diese Weise kann genau ermittelt werden, um welches spezielle Bauteil es sich handelt. Vorteilhaft wird daher das austauschbare Element selbst bestimmt. Bei einem weiteren bevorzugten Verfahren erfasst die Erfassungseinrichtung eine Mikrostruktur des Erkennungsbereiches. Genauer gesagt wird eine Mikrostruktur der Außenoberfläche dieses Erkennungsbereiches erfasst. Bevorzugt findet eine optische Erfassung dieses Erkennungsbereiches statt. Dabei ist vorteilhaft diese Mikrostruktur durch eine Bearbeitung oder Herstellung des Austauschteils entstanden und ist besonders bevorzugt zufällig jedoch eindeutig für dieses Austauschteil.

Bei einem weiteren vorteilhaften Verfahren wird ein Bild eines Erkennungsbereiches aufgenommen und mit wenigstens einem Referenzbild verglichen und auf Basis dieses Bereiches wird das austauschbare Teil charakterisiert. Vorteilhaft wird der Erkennungsbereich während einer Bewegung der Behandlungsstation bzw. des austauschbaren Teils erfasst.

Weitere Vorteile und Ausführungsformen ergeben sich aus den beigefügten Zeichnungen:
Darin zeigen:
   - Fig. 1: eine Behandlungsanlage zum Behandeln von Behältnissen mit einer erfindungsgemäßen Vorrichtung;
   - Fig. 2: eine schematische Darstellung einer Blasstation; und
   - Fig. 3: eine schematische Darstellung zur Veranschaulichung eines erfindungsgemäßen Verfahrens

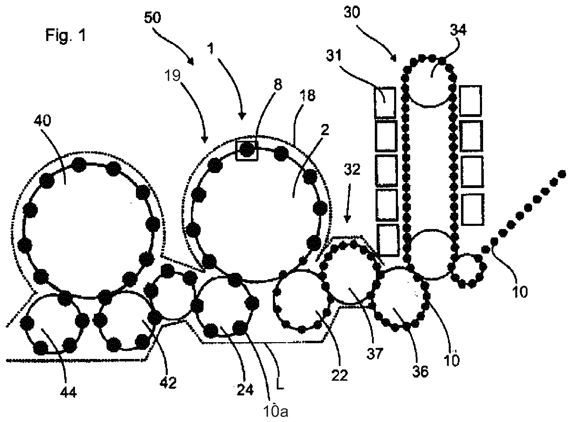

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 19 bezeichnet in seiner Gesamtheit einen Reinraum, dessen Außenbegrenzungen hier durch die punktierte Linie L angedeutet sind.

Das Bezugszeichen 1 bezeichnet in ihrer Gesamtheit eine erfindungsgemäße Umformungsvorrichtung, bei der an einem Transportrad 2 eine Vielzahl von Blasstationen bzw. Umformungsstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt.

Auch die einzelnen Anlagenteile wie die Heizeinrichtung 30, die Fülleinrichtung 40, die Sterilisationseinrichtung 32 oder die einzelnen Transporteinrichtungen 34, 22, 24 können jeweils austauschbare Teile aufweisen, auf welche die vorliegende Erfindung anwendbar ist, wie beispielsweise Haltedorne oder Greifklammern zum Halten der Behältnisse 10a, Fülldüsen und dergleichen.

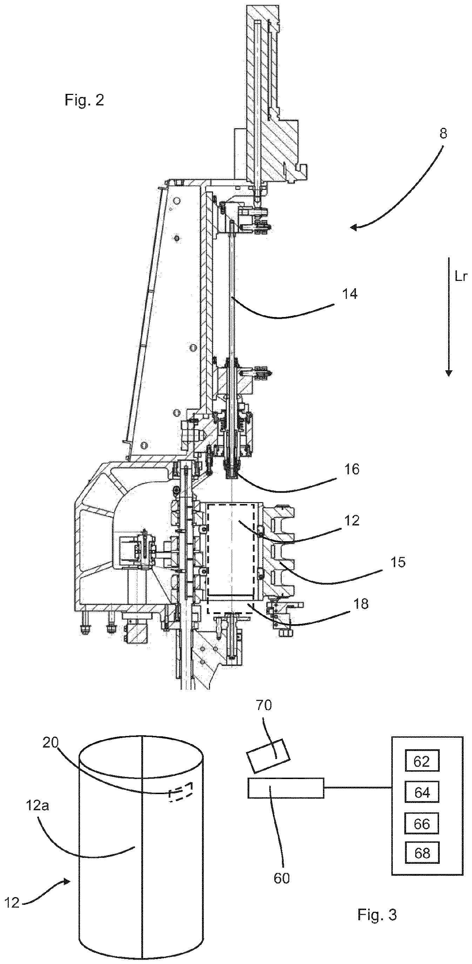

Figur 2 zeigt eine Seitenansicht einer Blasstation. Dabei bezieht sich das Bezugszeichen 14 auf eine Reckstange, die in einer Längsrichtung Lr der Kunststoffvorformlinge 10 bewegbar ist um diese zu dehnen. Das Bezugszeichen 16 bezieht sich auf eine Blasdüse bzw. eine Beaufschlagungeinrichtung, welche die (nicht gezeigten) Kunststoffvorformlinge 10 mit Druckluft beaufschlagt, um sie zu expandieren.

Die Blasform 12 wäre in der vorliegenden Darstellung nicht erkennbar, da sie innerhalb von Blasformträgern 15 angeordnet ist, und ist daher nur gestrichelt dargestellt. Das Bezugszeichen 18 bezieht sich auf ein Bodenteil der Blasform. Die hier gezeigten Elemente 14, 16, 12 und 18 sind Austauschteile, die beispielsweise bei der Umrüstung auf andere Behältnistypen ausgewechselt werden können. Diese genannten Austauschteile sind geeignet für das hier beschriebene Verfahren.

In Figur 3 ist schematisch eine Blasform 12 dargestellt. Diese Blasform 12 weist dabei eine Oberfläche, insbesondere eine Außenoberfläche 12a auf. Diese Außenoberfläche 12a ist dabei insbesondere eine metallische Oberfläche. Das Bezugszeichen 20 bezieht sich auf einen Erkennungsbereich, der innerhalb dieser Oberfläche 12a ausgebildet ist. So ist es dabei nicht notwendigerweise erforderlich, dass dieser Erkennungsbereich 20 in besonderer Weise bearbeitet ist, es wird jedoch von vornherein festgelegt, welcher Erkennungsbereich 20 künftig für die Identifizierung der Blasform 12 dienen kann. Das Bezugszeichen 60 bezieht sich auf eine Erfassungseinrichtung, welche wenigstens ein Bild dieses Erkennungsbereiches 20 aufnimmt.

In einer Speichereinrichtung 62 kann das besagte Bild abgespeichert werden und mit Hilfe einer Vergleichseinrichtung 64 mit anderen abgespeicherten Bildern verglichen werden. Falls das Bild mit einem der abgespeicherten Bilder übereinstimmt bzw. eine Übereinstimmung nach eventuell vorhergehender Korrektur festgestellt wird, kann auf diese Weise die Blasform 12 eindeutig identifiziert werden. Der Vergleich des jeweils aufgenommenen Bildes mit den abgespeicherten Bildern kann dabei pixelweise vorgenommen werden.

Entsprechend kann eine Steuerungseinrichtung 68 die Blasparameter zum Erzeugen der Kunststoffbehältnisse 10a einstellen. Falls festgestellt wird, dass der Erkennungsbereich 20 nicht mit einem der gespeicherten bzw. Referenzbereiche übereinstimmt, kann über die Anzeigeeinrichtung 66, bei der es sich beispielsweise um ein Display handeln kann, die Information an den Benutzer ausgegeben werden, so dass das verwendete Austauschteil, hier die verwendete Blasform 12, nicht mit einem vorbestimmten Blasformtyp übereinstimmt.

Vorteilhaft weist die Vorrichtung 1 auch eine Beleuchtungseinrichtung 70 auf, welche den Erkennungsbereich 20 beleuchtet, zumindest in dem Zeitraum, in dem die Erfassungseinrichtung 60 ein Bild von dem Erkennungsbereich 20 aufnimmt. Auf diese Weise kann eine einheitliche Beleuchtung des Erkennungsbereiches 20 ermöglicht werden.

### Bezugszeichenliste

- 1: Vorrichtung/Umformungsvorrichtung
- 2: Transporteinrichtung/Transportrad
- 8: Behandlungsstation /Blasstation/Umformungsstation
- 10: Kunststoffvorformlinge
- 10a: Kunststoffbehältnisse
- 12: auswechselbare Blasformen/austauschbares Element
- 12a: Außenoberfläche (insbesondere metallisch)
- 14: Reckstange/austauschbares Element
- 15: Blasformträger
- 16: austauschbares Element/Beaufschlagungseinrichtung
- 19: Reinraum
- 18: Bodenteil der Blasform/austauschbares Element
- 20: Erkennungsbereich
- 22: Zuführeinrichtung
- 24: Abführeinrichtung
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 60: Erfassungseinrichtung
- 62: Speichereinrichtung
- 64: Vergleichseinrichtung
- 66: Anzeigeeinrichtung
- 68: Steuerungseinrichtung
- 70: Beleuchtungseinrichtung

- L: Außenbegrenzungen
- Lr: Längsrichtung

## Patentansprüche

1. Vorrichtung (1) zum Umformen von Kunststoffvorformlingen (10) zu Kunststoffbehältnissen (10a) mit einer Transporteinrichtung (2), an der eine Vielzahl von Blasstationen (8) angeordnet ist, wobei diese Blasstationen (8) jeweils auswechselbare Blasformen (12) aufweisen, welche jeweils einen Hohlraum ausbilden, innerhalb dessen die Kunststoffvorformlinge (10) zu den Kunststoffbehältnissen (10a) umgeformt werden und wobei die Blasstationen (8) jeweils Beaufschlagungseinrichtungen (16) aufweisen, welche die Kunststoffvorformlinge (10) zu deren Expansion mit einem fließfähigen Medium beaufschlagen, wobei wenigstens ein austauschbares Element (12, 14, 16, 18) der Blasstationen (8) jeweils an einem vorgegebenen geometrischen Bereich seiner Oberfläche (12a) einen Erkennungsbereich (20) aufweist, welcher für das jeweilige austauschbare Element (12, 14, 16, 18) eindeutig charakteristisch ist und die Vorrichtung (1) weiterhin eine Erfassungseinrichtung (60) zum berührungslosen Erfassen dieses Erkennungsbereiches (20) aufweist,
wobei die Erfassungseinrichtung (60) auf den Erkennungsbereich (20) des austauschbaren Elementes (12, 14, 16, 18) ausgerichtet ist, **dadurch gekennzeichnet, dass**
der Erkennungsbereich (20) durch eine Oberfläche (12a) des austauschbaren Elements (12, 14, 16, 18) selbst ausgebildet ist und wobei der Erkennungsbereich (20) eine eindeutige Struktur und insbesondere eine eindeutige Mikrostruktur aufweist, die mit dem menschlichen Auge nicht erfassbar ist.

2. Vorrichtung (1) nach Anspruch 1,
**dadurch gekennzeichnet, dass**
die Vorrichtung (1) eine Speichereinrichtung (62) aufweist, in der eine Vielzahl von Referenzbildern von Erkennungsbereichen (20) abgelegt ist, sowie eine Vergleichseinrichtung (64), welche ein von der Erfassungseinrichtung (60) erfasstes Bild mit den in der Speichereinrichtung abgelegten Referenzbildern vergleicht.

3. Vorrichtung (1) nach wenigstens einem der vorangegangenen Ansprüche,
**dadurch gekennzeichnet, dass**
der Erkennungsbereich (20) eine durch einen Herstellungsprozess des austauschbaren Elements entstandene wahrnehmbare Struktur aufweist.

4. Vorrichtung (1) nach wenigstens einem der vorangegangenen Ansprüche,
**dadurch gekennzeichnet, dass**
die Erfassungseinrichtung (60) eine optische Erfassungseinrichtung (60) ist.

5. Vorrichtung (1) nach wenigstens einem der vorangegangenen Ansprüche,
**dadurch gekennzeichnet, dass**
das austauschbare Element aus einer Gruppe von austauschbaren Elementen ausgewählt ist, welche Blasformen (12), Reckstangen (14), Haltedorne, Greifklammern, Bodenteile (18), Blasdüsen (16) und dergleichen enthält.

6. Verfahren zum Betreiben einer Vorrichtung (1) zum Umformen von Kunststoffvorformlingen (10) zu Kunststoffbehältnissen (10a), wobei die Vorrichtung (1) eine Vielzahl von Behandlungsstationen (8) aufweist, innerhalb derer die Kunststoffvorformlinge (10) durch Beaufschlagung mit einem fließfähigen Medium zu den Kunststoffbehältnissen (10a) umgeformt werden und wobei mittels einer Erfassungseinrichtung (60) jeweils wenigstens ein vorgegebener Erkennungsbereich (20) wenigstens eines austauschbaren Elements (12, 14, 16, 18) der Behandlungsstationen (8) erfasst wird, wobei dieser Erkennungsbereich (20) für das jeweilige austauschbare Element (12, 14, 16,18) eindeutig charakteristisch ist,
**dadurch gekennzeichnet, dass**
der Erkennungsbereich (20) durch eine von der Erfassungseinrichtung (60) erfassbare Oberfläche (12a) des austauschbaren Elements (12, 14, 16, 18) selbst ausgebildet wird und wobei der Erkennungsbereich (20) eine eindeutige Struktur und insbesondere eine eindeutige Mikrostruktur aufweist, die mit dem menschlichen Auge nicht erfassbar ist.

7. Verfahren nach Anspruch 6,
**dadurch gekennzeichnet, dass**
das austauschbare Element durch die Erfassung des Erkennungsbereichs (20) eindeutig charakterisiert wird.

8. Verfahren nach wenigstens einem der vorangegangenen Ansprüche,
**dadurch gekennzeichnet, dass**
die Erfassungseinrichtung (60) eine Mikrostruktur des Erkennungsbereichs (20) erfasst.

9. Verfahren nach wenigstens einem der vorangegangenen Ansprüche,
**dadurch gekennzeichnet, dass**
ein Bild des Erkennungsbereichs (20) aufgenommen wird und mit wenigstens einem Referenzbild verglichen wird und auf Basis dieses Vergleichs das austauschbare Element (12, 14, 16, 18) charakterisiert wird.

## Claims

1. A device (1) for transforming plastic preforms (10) into plastic containers (10a) by means of a transport apparatus (2) at which a plurality of blowing stations (8) are arranged, wherein these blowing stations (8) each include exchangeable blowing moulds (12), each of which are forming a cavity in which the plastic preforms (10) are transformed into the plastic containers (10a), and wherein the blowing stations (8) each include charging apparatuses (16) which charge the plastic preforms (10) for the expansion thereof with a free-flowing medium, wherein at least one exchangeable element (12, 14, 16, 18) of the blowing stations (8) respectively includes a detection area (20) at a predetermined geometrical area of its surface (12a) which is uniquely characteristic for the respective exchangeable element (12, 14, 16, 18), and wherein the device (1) further includes a sensing apparatus (60) for the contactless sensing of this detection area (20),
wherein the sensing apparatus (60) is oriented towards the detection area (20) of the exchangeable element (12, 14, 16, 18),
**characterised in that** the detection area (20) itself is formed by a surface (12a) of the exchangeable element (12, 14, 16, 18), and wherein the detection area (20) has a unique structure and in particular a unique microstructure which is not detectable by human eyes.

2. The device (1) according to claim 1,
**characterised in that**
the device (1) includes a storage apparatus (62) in which a plurality of reference images of detection areas (20) are archived, as well as a comparison apparatus (64) which compares an image sensed by the sensing apparatus (60) with the reference images archived in the storage apparatus.

3. The device (1) according to at least one of the preceding claims,
**characterised in that**
the detection area (20) includes a perceivable structure produced by a manufacturing process of the exchangeable element.

4. The device (1) according to at least one of the preceding claims,
**characterised in that**
the sensing apparatus (60) is an optical sensing apparatus (60).

5. The device (1) according to at least one of the preceding claims,
**characterised in that**
the exchangeable element is selected from a group of exchangeable elements including blowing moulds (12), stretching rods (14), holding mandrels, gripping clamps, base parts (18), blowing nozzles (16) and the like.

6. A method for operating a device (1) for transforming plastic preforms (10) into plastic containers (10a), wherein the device (1) includes a plurality of treatment stations (8) in which the plastic preforms (10) are transformed into plastic containers (10a) by charging them with a free-flowing medium, and wherein at least one predetermined detection area (20) of at least one exchangeable element (12, 14, 16, 18) of the treatment stations (8) is respectively sensed by means of a sensing apparatus (60), wherein this detection area (20) is uniquely characteristic for the respective exchangeable element (12, 14, 16, 18), **characterised in that**
the detection area (20) itself is formed by a surface (12a) of the exchangeable element (12, 14, 16, 18) which can be sensed by the sensing apparatus (60), and wherein the detection area (20) has a unique structure and in particular a unique microstructure which is not detectable by human eyes.

7. The method according to claim 6,
**characterised in that**
the exchangeable element is uniquely **characterised by** the sensing of the detection area (20).

8. The method according to at least one of the preceding claims,
**characterised in that**
the sensing apparatus (60) senses a microstructure of the detection area (20).

9. The method according to at least one of the preceding claims,
**characterised in that**
an image of the detection area (20) is taken and compared with at least one reference image and the exchangeable element (12, 14, 16, 18) is characterised on the basis of this comparison.

## Revendications

1. Dispositif (1) de transformation d'ébauches en matière plastique (10) en récipients en matière plastique (10a), comprenant un système de transport (2) sur lequel une pluralité de stations de soufflage (8) sont agencées, ces stations de soufflage (8) présentant des moules de soufflage (12) respectivement interchangeables, lesquels forment chacun une cavité à l'intérieur de laquelle les ébauches en matière plastique (10) sont transformées en récipients en matière plastique (10a) et les stations de soufflage (8) comprenant chacune des systèmes d'application (16), lesquels appliquent un milieu coulant aux ébauches en matière plastique (10) pour les faire se dilater, au moins un élément interchangeable (12, 14, 16, 18) des stations de soufflage (8) présentant respectivement sur une zone géométrique prédéfinie de sa surface (12a) une zone d'identification (20), laquelle identifie clairement l'élément interchangeable (12, 14, 16, 18) respectif et le dispositif (1) comprend en outre un système de détection (60) pour la détection sans contact de cette zone d'identification (20),
le système de détection (60) étant orienté vers la zone d'identification (20) de l'élément interchangeable (12, 14, 16, 18), **caractérisé en ce que** la zone d'identification (20) est formée par une surface (12a) de l'élément interchangeable (12, 14, 16, 18) lui-même et la zone d'identification (20) présentant une structure nette et en particulier une microstructure nette non décelable par l'oeil humain.

2. Dispositif (1) selon la revendication 1,
**caractérisé en ce que**
le dispositif (1) comprend un système de mise en mémoire (62) dans lequel une pluralité d'images de référence des zones d'identification (20) sont mises en mémoire, ainsi qu'un système de comparaison (64), lequel compare une image détectée par le système de détection (60) aux images de référence mises en mémoire dans le système de mise en mémoire.

3. Dispositif (1) selon l'une quelconque des revendications précédentes,
**caractérisé en ce que**
la zone d'identification (20) présente une structure perceptible obtenue par un processus de fabrication de l'élément interchangeable.

4. Dispositif (1) selon au moins l'une des revendications précédentes,
**caractérisé en ce que**
le système de détection (60) est un système de détection optique (60).

5. Dispositif (1) selon au moins l'une des revendications précédentes,
**caractérisé en ce que**
l'élément interchangeable est sélectionnée parmi un groupe d'éléments interchangeables, lequel contient des moules de soufflage (12), des barres d'étirage (14), des mandrins de retenue, des pinces de préhension, des parties formant fond (18), des buses de soufflage (16) et similaires.

6. Procédé de fonctionnement d'un dispositif (1) de transformation d'ébauches en matière plastique (10) en récipients en matière plastique (10a), le dispositif (1) comprenant une pluralité de stations de traitement (8) à l'intérieur desquelles les ébauches en matière plastique (10) sont transformées en récipients en matière plastique (10a) par application d'un milieu coulant et respectivement au moins une zone d'identification (20) prédéfinie d'au moins un élément interchangeable (12, 14, 16, 18) des stations de traitement (8) étant détectée au moyen d'un système de détection (60), cette zone d'identification (20) identifiant clairement l'élément interchangeable (12, 14, 16, 18) respectif,
**caractérisé en ce que**
la zone d'identification (20) est formée par une surface (12a) de l'élément interchangeable (12, 14, 16, 18) pouvant être détectée par le système de détection (60) et la zone d'identification (20) présentant une structure claire et en particulier une microstructure claire non décelable par l'oeil humain.

7. Procédé selon la revendication 6,
**caractérisé en ce que**
l'élément interchangeable est identifié clairement par la détection de la zone d'identification (20).

8. Procédé selon au moins l'une des revendications précédentes,
**caractérisé en ce que**
le système de détection (60) détecte une microstructure de la zone d'identification (20).

9. Procédé selon au moins l'une des revendications précédentes,
**caractérisé en ce que**
une image de la zone d'identification (20) est prise et comparée à au moins une image de référence et l'élément interchangeable (12, 14, 16, 18) est identifié sur la base de cette comparaison.
